# EUROPEAN PATENT SPECIFICATION

(11) **EP 3 713 183 B1**
(45) Date of publication and mention of the grant of the patent: **11.09.2024**
(21) Application number: 18879400.2
(22) Date of filing: 07.11.2018
(51) Int. Cl.: H04L 9/40, H04L 65/40

(54) **NETWORK INTERACTION METHOD, ELECTRONIC DEVICE, CLIENT, AND SERVER**
NETZWERKINTERAKTIONSVERFAHREN, ELEKTRONISCHE VORRICHTUNG, CLIENT UND SERVER
PROCÉDÉ D'INTERACTION DE RÉSEAU, DISPOSITIF ÉLECTRONIQUE, CLIENT ET SERVEUR

(30) Priority: 15.11.2017 CN 201711128920
(43) Date of publication of application: 23.09.2020
(73) Proprietor: Alibaba Singapore Holding Private Limited, Singapore 189554 (SG)
(72) Inventor: LIU, Xiaoming, Hangzhou, Zhejiang 311121 (CN)
(74) Representative: Boult Wade Tennant LLP
(86) International application number: PCT/CN2018/114347
(87) International publication number: WO 2019/096045

(56) References cited:
- WO-A1-2015/172616
- WO-A2-2012/053817
- CN-A- 103 473 261
- CN-A- 104 601 582
- CN-A- 105 809 840
- CN-A- 107 067 240
- CN-A- 107 067 240

## Description

### CROSS-REFERENCE TO RELATED APPLICATIONS

The present application claims priority to and is the national stage entry of Int'l Appl. No. PCT/CN18/114347 filed Nov. 7, 2018, which claims priority to the Chinese Patent Application No. 201711128920.1 filed Nov. 15, 2017.

### BACKGROUND

### Technical Field

Embodiments of the disclosure relate to the field of Internet technologies, and in particular, to network interaction methods, electronic devices, clients, and servers.

### Description of the Related Art

With the continuous development of Internet technologies, the technology for transmitting files between different terminal devices has matured. Many current instant messaging software programs support the function of transmitting files online or offline.

In some industries, specialists may need to send their information to an inspection agency for inspection. In this case, the specialist may visit the inspection agency's website through a local device or may open an application provided by the inspection agency to complete the procedure of uploading files to the website or the application. For example, in the import-export trade industry, merchants are only allowed to conduct import and export trades after they have uploaded a design scheme and a declaration form to customs and have obtained approval from the inspection agency. However, due to the lack of effective regulation as to how merchants should upload materials, the information uploaded by the merchant may be untrue, contributing to the concerning problem of falsification.

In view of this, at present, inspection agencies may send an inspector to visit the user's worksite, verify the information regarding the worksite, and then upload the materials to the inspection agency for the user using the inspector's terminal device, thereby reducing instances of falsification. In the process of the inspector uploading the materials, the user's material is inevitably stored in the inspector's terminal device, which may compromise the security of the materials. Therefore, at present, an uploading method providing improved security for materials is needed.

WO2015/172616 discusses a method, device and system for uploading a file to a cloud disk, and a cloud disk server.

CN107067240 discusses a resource allocation method, which is suitable for a server. The method comprises the steps of receiving a first request used for accessing the server and sent by a first client, wherein the first request carries token information, and the token information has a corresponding relationship with resource information of a second client; according to the token information carried in the first request, determining the resource information, corresponding to the token information, of the second client; and receiving resource allocation information input by the first client, and finishing resource allocation according to the resource allocation information input by the first client and the resource information of the second client.

### SUMMARY

Aspects and embodiments of the invention are defined by the appended claims.

### SUMMARY

The invention is defined by the independent claims, with various embodiments of the invention being set out in the dependent claims. The disclosed embodiments provide network interaction methods, electronic devices, clients, and servers, which improve the security of transmitted material.

In one embodiment, a network interaction method, applied to a client, is disclosed, the method comprising: sending an identification code acquisition request to a server, so that the server provides an identification code; receiving the identification code returned by the server; displaying the identification code, to input the identification code to an electronic device providing a file, so that the identification code corresponds to the file; receiving file information provided by the server, the file information used for indicating the file corresponding to the identification code; and sending form confirmation information to the server, the form confirmation information used for indicating that a form has been completed based on the file information.

An embodiment of the disclosure further provides a client, comprising: an acquisition module, used for sending an identification code acquisition request to a server, so that the server provides an identification code; an identification code receiving module, used for receiving the identification code returned by the server; a display module, used for displaying the identification code, to input the identification code to an electronic device providing a file, so that the identification code corresponds to the file; a file information receiving module, used for receiving file information provided by the server, the file information used for indicating the file corresponding to the identification code; and a sending module, used for sending form confirmation information to the server, the form confirmation information used for indicating that a form has been completed based on the file information.

An embodiment of the disclosure further provides an electronic device, comprising a network communication unit and a display, wherein the network communication unit is used for sending an identification code acquisition request to a server, so that the server provides an identification code; receiving the identification code returned by the server; receiving file information provided by the server, the file information used for indicating a file corresponding to the identification code; and sending form confirmation information to the server, the form confirmation information used for indicating that a form has been completed based on the file information; and the display is used for displaying the identification code, to input the identification code to an electronic device providing a file, so that the identification code corresponds to the file.

An embodiment of the disclosure further provides a computer storage medium, the computer storage medium having computer program instructions stored thereon, wherein the computer program instructions, when executed, implement the following: sending an identification code acquisition request to a server, so that the server provides an identification code; receiving the identification code returned by the server; displaying the identification code, to input the identification code to an electronic device providing a file, so that the identification code corresponds to the file; receiving file information provided by the server, the file information used for indicating the file corresponding to the identification code; and sending form confirmation information to the server, the form confirmation information used for indicating that a form has been completed based on the file information.

An alternative described herein provides a network interaction method, applied to a client, the method comprising: generating an identification code; sending the identification code to a server; displaying the identification code, to input the identification code to an electronic device providing a file, so that the identification code corresponds to the file; receiving file information provided by the server, the file information used for indicating the file corresponding to the identification code; and sending form confirmation information to the server, the form confirmation information used for indicating that a form has been completed based on the file information. This alternative is useful for understanding the invention.

An alternative described herein provides a client, the client comprising: an identification code generation module, used for generating an identification code; an identification code sending module, used for sending the identification code to a server; a display module, used for displaying the identification code, to input the identification code to an electronic device providing a file, so that the identification code corresponds to the file; a file information receiving module, used for receiving file information provided by the server, the file information used for indicating the file corresponding to the identification code; and a sending module, used for sending form confirmation information to the server, the form confirmation information used for indicating that a form has been completed based on the file information. This alternative is useful for understanding the invention.

An alternative described herein provides an electronic device, comprising a network communication unit, a processor and a display, wherein the network communication unit is used for performing data interaction with a server, the display is used for displaying an identification code, and the processor is used for generating an identification code; sending the identification code to the server through the network communication unit; controlling the display to display the identification code, to input the identification code to an electronic device providing a file, so that the identification code corresponds to the file; receiving, through the network communication unit, file information provided by the server, the file information used for indicating a file corresponding to the identification code; and sending form confirmation information to the server through the network communication unit, the form confirmation information used for indicating that a form has been completed based on the file information. This alternative is useful for understanding the invention.

An alternative described herein provides a computer storage medium, the computer storage medium having computer program instructions stored thereon, wherein the computer program instructions, when executed, implement the following: generating an identification code; sending the identification code to a server; displaying the identification code, to input the identification code to an electronic device providing a file, so that the identification code corresponds to the file; receiving file information provided by the server, the file information used for indicating the file corresponding to the identification code; and sending form confirmation information to the server, the form confirmation information used for indicating that a form has been completed based on the file information. This alternative is useful for understanding the invention.

An example useful for understanding the invention provides a network interaction method, the method comprising the following: upon receiving an identification code acquisition request sent by a first client, sending a generated identification code to the first client; upon receiving the identification code and a file corresponding to the identification code that are sent by a second client, sending file information of the file to the first client; and receiving form confirmation information provided by the first client, the form confirmation information used for indicating that a form has been completed based on the file information.

An example useful for understanding the invention provides an electronic device, the electronic device comprising a processor and a memory, wherein the memory has a computer program stored thereon, and the computer program, when executed by the processor, implements the following steps: upon receiving an identification code acquisition request sent by a first client, sending a generated identification code to the first client; upon receiving the identification code and a file corresponding to the identification code that are sent by a second client, sending file information of the file to the first client; and receiving form confirmation information provided by the first client, the form confirmation information used for indicating that a form has been completed based on the file information.

An example useful for understanding the invention provides a network interaction method, the method comprising the following: upon receiving an identification code acquisition request sent by a client, sending a generated identification code to the client; acquiring, from an information server, file information of a file corresponding to the identification code; sending the file information to the client; and receiving form confirmation information provided by the client, the form confirmation information used for indicating that a form has been completed based on the file information.

An example useful for understanding the invention provides a service server, the service server comprising a processor and a memory, wherein the memory has a computer program stored thereon, and the computer program, when executed by the processor, implements the following steps: upon receiving an identification code acquisition request sent by a client, sending a generated identification code to the client; acquiring, from an information server, file information of a file corresponding to the identification code; sending the file information to the client; and receiving form confirmation information provided by the client, the form confirmation information used for indicating that a form has been completed based on the file information.

An example useful for understanding the invention provides a network interaction method, the method comprising the following: receiving an identification code provided by a client; acquiring, from an information server, file information of a file corresponding to the identification code; sending the file information to the client; and receiving form confirmation information provided by the client, the form confirmation information used for indicating that a form has been completed based on the file information.

An example useful for understanding the invention provides a service server, the service server comprising a processor and a memory, wherein the memory has a computer program stored thereon, and the computer program, when executed by the processor, implements the following steps: receiving an identification code provided by a client; acquiring, from an information server, file information of a file corresponding to the identification code; sending the file information to the client; and receiving form confirmation information provided by the client, the form confirmation information used for indicating that a form has been completed based on the file information.

An example useful for understanding the invention provides a network interaction method, the method comprising the following: receiving an identification code and a file corresponding to the identification code that are sent by a client; and sending the identification code and file information of the file to a service server, so that the service server provides the file information to the client for confirmation by the client.

An example useful for understanding invention provides an information server, the information server comprising a processor and a memory, wherein the memory has a computer program stored thereon, and the computer program, when executed by the processor, implements the following steps: receiving an identification code and a file corresponding to the identification code that are sent by a client; and sending the identification code and file information of the file to a service server, so that the service server provides the file information to the client for confirmation by the client.

In an example useful for understanding the invention, when an inspector needs to upload a file of a user to a server, the inspector acquires an identification code from the server in advance, and then displays the identification code to the user for viewing. The user uploads the file inspected by the inspector to the server through his own electronic device. While uploading the file, the user attaches the identification code. This way, after the server receives the file and the identification code uploaded by the user, the server sends the file information of the file to a client of the inspector who had previously acquired the identification code. The file information herein does not refer to the file per se, but may refer to an identifier representing the file. For example, the file information may be the title of the file. This way, after the client of the inspector receives the file information, a form can be completed based on the file and form confirmation information can be returned to the server to indicate that the file corresponding to the file information is indeed inspected and verified. As seen above, by means of the technical solutions in the disclosure, the client of the inspector does not store the files uploaded by the user, thereby ensuring security of user files.

### BRIEF DESCRIPTION OF THE DRAWINGS

To illustrate the technical solutions in the embodiments of the disclosure, the drawings which are used in the description of the embodiments are introduced briefly below. The drawings described below are merely some embodiments disclosed in the disclosure, and those of ordinary skill in the art may still derive other drawings from these drawings without creative efforts.
FIG. 1 is a block diagram of a network interaction system according to some embodiments of the disclosure.
FIG. 2 is a swimlane diagram of network interactions according to some embodiments of the disclosure.
FIG. 3 is a diagram of a user interface according to some embodiments of the disclosure.
FIG. 4 is a diagram of a user interface according to some embodiments of the disclosure.
FIG. 5 is a swimlane diagram of network interactions according to some embodiments of the disclosure.
FIG. 6 is a block diagram of a network interaction system according to some embodiments of the disclosure.
FIG. 7 is a diagram of a user interface according to some embodiments of the disclosure.
FIG. 8 is a diagram of a user interface according to some embodiments of the disclosure.
FIG. 9 is a diagram of a user interface according to some embodiments of the disclosure.
FIG. 10 is a flow diagram illustrating a network interaction method performed by a client device according to some embodiments of the disclosure.
FIG. 11 is a block diagram of a client device according to some embodiments of the disclosure.
FIG. 12 is a block diagram of an electronic device according to some embodiments of the disclosure.
FIG. 13 is a flow diagram illustrating a network interaction method performed by a server according to some embodiments of the disclosure.

### DETAILED DESCRIPTION

To enable those skilled in the art to better understand the technical solutions of the disclosure, the technical solutions in the embodiments of the disclosure will be described clearly and completely below with reference to the drawings in the embodiments of the disclosure. The described embodiments are merely some, rather than all, of the embodiments of the disclosure. Based on the embodiments in the disclosure, all other embodiments obtained by those of ordinary skill in the art without making creative efforts shall fall within the scope of the disclosure.

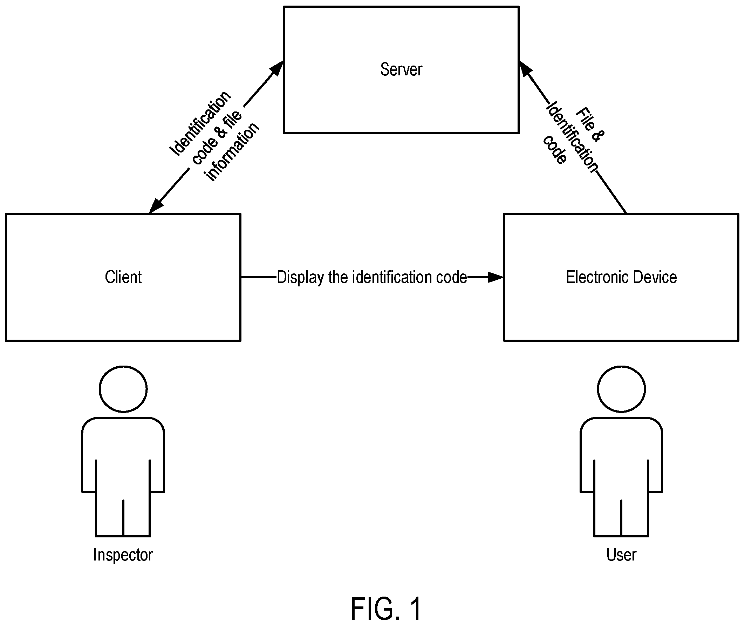

Referring to FIG. 1, an embodiment of the disclosure provides a network interaction system, the network interaction system including a client, an electronic device and a server. The client may be a terminal device for use by an inspector. The client may be a notebook or laptop computer, a tablet computer, a personal digital assistant, a smart wearable device, a smartphone, or the like that is portable and provides the network communication function. The electronic device may be a terminal device used by a user who needs to upload a file. The electronic device may be a desktop computer, a tablet computer, a notebook or laptop computer, a smartphone, a digital assistant, a smart wearable device, a shopping guide terminal, or the like that has the network communication and data storage functions. The server may be an electronic device for receiving files uploaded by a user. The server may be one or a plurality of servers, or a server cluster formed by many servers. The disclosure does not limit the number of servers. In some embodiments, in addition to the aforementioned client, electronic device and server, the objects performing data interaction in the network interaction system may also be software running in the aforementioned client, electronic device and server.

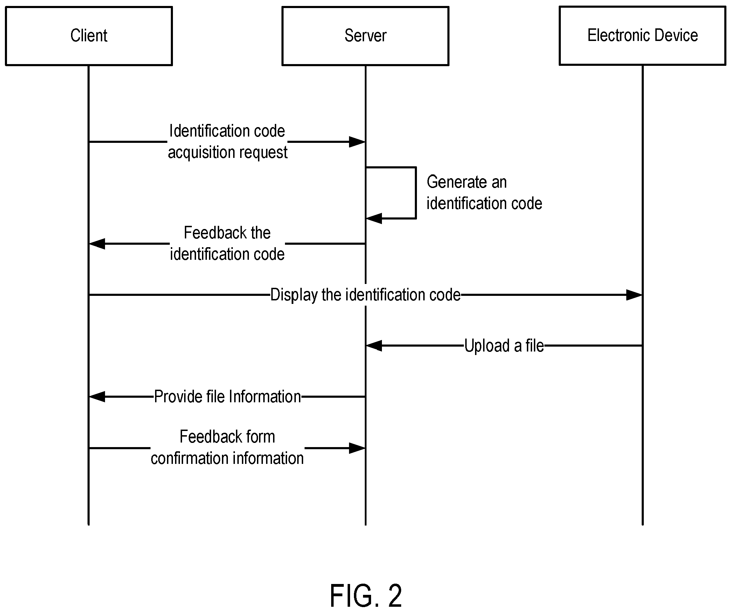

Referring to FIG. 2, in this embodiment, when the user needs to upload a file to the server, an identification code acquisition request may be sent to the server through the client of the inspector. The identification code acquisition request may include an identifier for representing the client. This way, the server can subsequently feedback a generated identification code to the client according to the identifier. Specifically, the identifier may be the Internet Protocol (IP) address of the client in the network or may be a login account ID in the software running in the client.

In this embodiment, the server may generate a corresponding identification code after receiving the identification code acquisition request sent from the client. The identification code may be a character string. In practical applications, the identification code may be associated with a valid duration. The valid duration is used for representing a duration in which the identification code is in a valid state. For example, if the valid duration associated with the identification code is 10 minutes, then it indicates that the identification code is valid within 10 minutes after the identification code is generated. However, the identification code becomes invalid after 10 minutes. In this embodiment, the generating an identification code may include generating the identification code in the current manner of generating a verification code and may further include generating the identification code according to the identification code acquisition request. Specifically, when the identification code is generated according to the identification code acquisition request, the identification code acquisition request may be a character string carrying a client identifier and a request sent time. In a practical application scenario, the character string may be mapped to a hash value with a fixed length using a hash operation. The hash value can thus serve as the identification code. Since usually only one identification code acquisition request is sent by a client at a time, the hash value generated according to the identification code acquisition request is unique, thereby ensuring the uniqueness of the generated identification code.

In this embodiment, the server may feedback the identification code to the client after generating the identification code. This way, the client of the inspector can display the identification code to the user of the electronic device for viewing after receiving the identification code. Thus, the user can input the identification code to his own electronic device according to the identification code displayed and associate a to-be-uploaded file with the identification code. Specifically, the associating the file with the identification code may include sending, by the electronic device, a file upload packet to the server. The file upload packet may include both the file and the identification code so that the file and the identification code in the same file upload packet can be associated. After receiving the packet uploaded by the electronic device, the server can extract the file and the identification code in the packet and locally and associatively store the file and the identification code.

In this embodiment, after the server receives the file and the identification code uploaded by the user's electronic device, to confirm that the file has indeed been inspected by the inspector, feedback can be made to the client who requested identification code generation regarding file information of the file associated with the identification code. In some embodiments, to ensure the security of files uploaded by users, the server does not feedback the file to the client of the inspector. Instead, file information of the file is returned. The file information may refer to the file name and file type. For example, if the file uploaded by the user is a declaration form edited using Excel, then the file information received by the client can be "Declaration Form," and the type can be "Excel." This way, the client will only receive the file information without receiving the file per se, thereby ensuring file security.

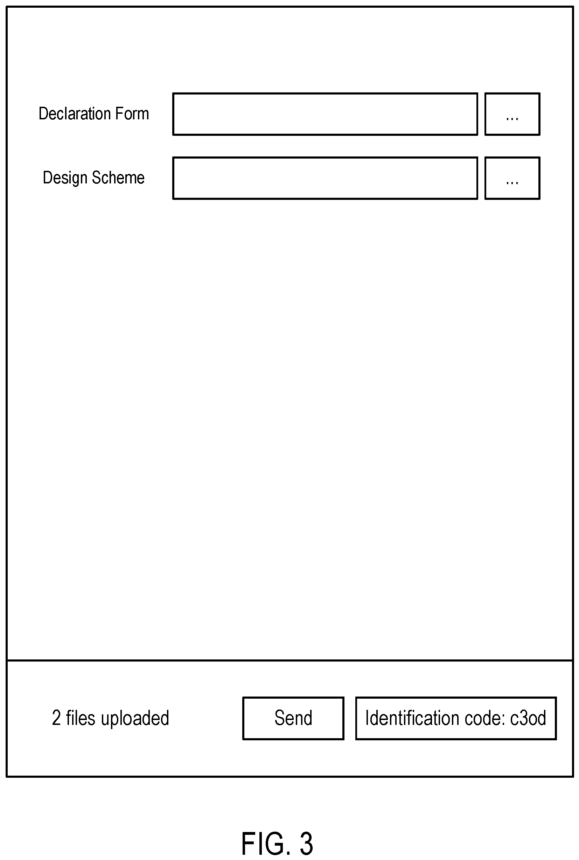

In this embodiment, after receiving file information sent from the server, the client of the inspector may feedback form confirmation information to the server. The form confirmation information may just be a confirmation instruction without any specific content. This way, after receiving the form confirmation information sent from the client, the server will regard the file represented by the file information as inspected, then the server can then locally archive the file. Additionally, the form confirmation information may also be used for classifying files represented by the file information. In a practical application scenario, a user may upload more than one file at once. Accordingly, having received multiple files, the server will not know the content of each file. At this time, the server may send file information of the files to the client, so that the inspector can classify the file information in the client according to file names contained in the file information. Referring to FIG. 3, the client may have widgets corresponding to files that will potentially be uploaded. The widgets allow file information corresponding to the file to be loaded. For example, in the widget corresponding to the Declaration Form in FIG. 3, file information with the file name of "Manufacturer's Declaration Form" may be loaded, whereas in the widget corresponding to the Design Scheme, file information with the file name of "Manufacturer's Design Scheme" may be loaded. This way, loading file information on the corresponding widgets in the client is thus equal to adding a tag to the file information. When providing form confirmation information to the server, the client can send file information to the server along with a tag added to the file information. The server identifies the tag of the file information to determine file type represented by the file information and stores the file in a specified path in accordance with the type thereof.

In one embodiment, when displaying a received identification code, the client may display the identification code on a display of the client. This way, the user can view the identification code on the display of the client. Additionally, the client may further play the identification code through a loudspeaker so that the user can directly listen to the identification code without viewing the display of the client. Additionally, the client may further display, through the display, a resource having the identification code. The resource may be, for example, a document having the identification code as the document name. The resource may be sent to the electronic device through the client so that the electronic device can locally view the identification code. Additionally, the client may further display, through the display, a graphic code representing the identification code. The graphic code may be a QR code, a bar code, or the like for representing the identification code. After scanning the graphic code, the user's electronic device will automatically identify the identification code represented by the graphic code.

In one embodiment, after acquiring the identification code, the client may upload the to-be-uploaded file and the identification code together to the server. Specifically, the client may send an email with the file to be uploaded as the attachment, the identification code as the email content or email name, and the email address of the server as the recipient. That way, the file, and the identification code can be sent together to the server.

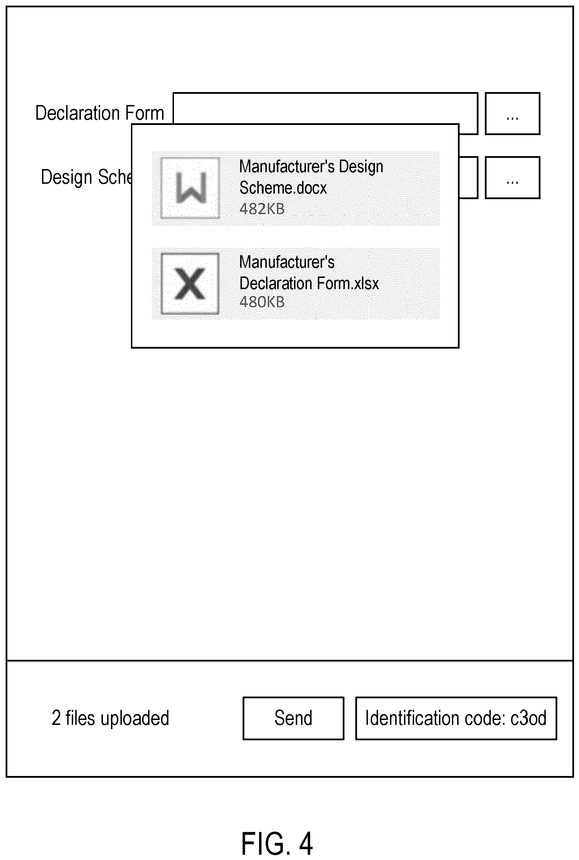

In one embodiment, after receiving the file information sent from the server, the client may display the file information in a specified widget according to the operation of the inspector. Specifically, the specified widget may be an interaction bar for loading file information. The user clicks the interaction bar or a button beside the interaction bar to call out a file information selection interface from the client. Referring to FIG. 4, file information corresponding to the currently generated identification code may be listed in this interface. For example, in FIG. 4, the user sends two files, namely "User's Declaration Form" and "User's Design Scheme," to the server through the electronic device. Then, the interface called out at this time can include file information of these two files. The inspector may select to fill in corresponding file information according to the current widget type. After filling in the file information into the corresponding widget, the client can add a corresponding tag to the file information. This way, when providing form confirmation information to the server, the client can send file information to the server along with a tag added to the file information. The server identifies the tag of the file information to determine file type represented by the file information, to store the file in a specified path in accordance with the type thereof. In some embodiments, the inspector may also serve as a user with respect to the client. Thus, the user in the disclosure may refer to a different person depending on the terminal device.

In one embodiment, the file information received by the client may include a file identifier for representing a file, where the file identifier may be, for example, the file name. This way, after receiving file information, the client can automatically identify the file identifier in the file information. Once the meaning of the file identifier is recognized, the file information can be automatically displayed in a corresponding specified widget. For example, when the client recognizes the file identifier of file information to be "Manufacturer's Declaration Form," then the client can automatically display the file information in the specified widget representing the "Declaration Form." Specifically, the client may identify the file identifier using OCR (Optical Character Recognition) technology. With automatic identification and automatic display, the workload of the inspector can be decreased.

In one embodiment, the identification code may further be directly generated by the client. Specifically, after the to-be-uploaded file of the user is inspected by the inspector, the inspector may trigger an operation generating an identification code in his own client. For example, the inspector may click the button "Generate Identification Code" in the current interface of the client so that the client can generate an identification code. Specifically, to ensure that different identification codes are generated for different clients, the identification code may be generated based on the account that the client currently logged into and the time at which identification code generation was triggered. Since usually only one identification code generation instruction is triggered by an account at a time, the uniqueness of the identification code generated based on account information and time information can be assured. Specifically, a character string representing account information and time information may be mapped to a character string with a fixed length through a hash algorithm, where the character string with the fixed-length may serve as the identification code. This way, the client can directly display the identification code to the user for viewing and can send the identification code to the server, so that when the server receives file information corresponding to the identification code, the server will send the file information to the client.

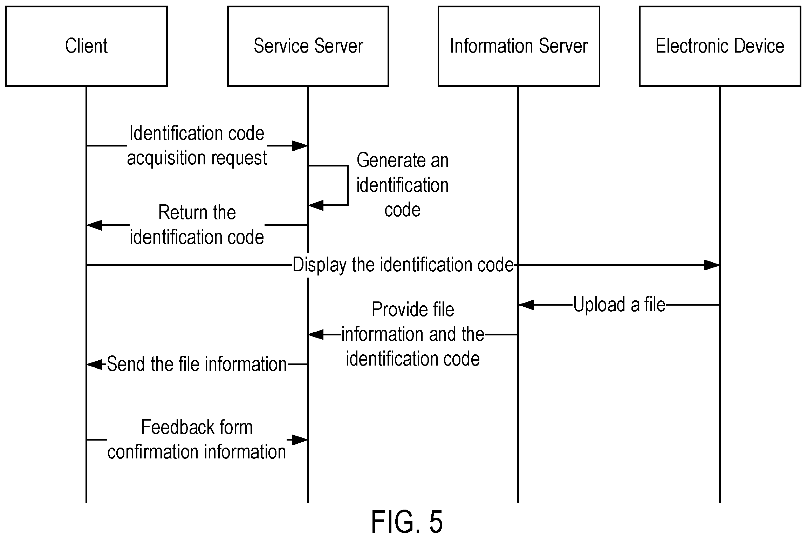

In one embodiment of the disclosure, a server may be split into two servers having independent functions, as illustrated in FIG. 5. In the illustrated embodiment, a server may include a service server and an information server. The service server may perform data interaction with a client of an inspector to receive an identification code acquisition request sent from the client, provide a generated identification code to the client, return file information of a file uploaded by the user to the client, and receive form confirmation information sent from the client. The information server may then receive a file uploaded by the user's electronic device and provide file information of the file to the service server. Specifically, when a file of the user is inspected by the inspector, the inspector may send an identification code acquisition request to the service server through the client, so that the service server can generate an identification code in the aforementioned manner and return the identification code to the client. The client may display the identification code to the user so that the user can input the identification code to the electronic device and send the to-be-uploaded file along with the identification code to the information server. In certain applications, when a user uploads files by sending emails, the information server can be an email server. This way, after receiving the file and the identification code uploaded by the user's electronic device, the information server can send file information of the file and the identification code to the service server. Thus, the service server can provide the file information to the client that has previously requested identification code generation. After receiving the file information, the client may fill in the file information in a corresponding specified widget, to implement the process of adding a tag to the file information. This way, after filling in the file information in the corresponding specified widget, the client can send form confirmation information to the service server. The form confirmation information may be used for indicating that a form has been completed based on the file information, namely that a corresponding tag has been added to the file information.

In one embodiment, the identification code may also be locally generated by the client, so that after a file of the user is inspected by the inspector, the inspector can generate a current identification code in the client. This way, the client of the inspector can directly provide the current identification code that has been generated to the service server, and display the generated identification code to the user for viewing. The subsequent file upload and file information transmission processes are both consistent with the description in the aforementioned embodiments, which will not be described herein again.

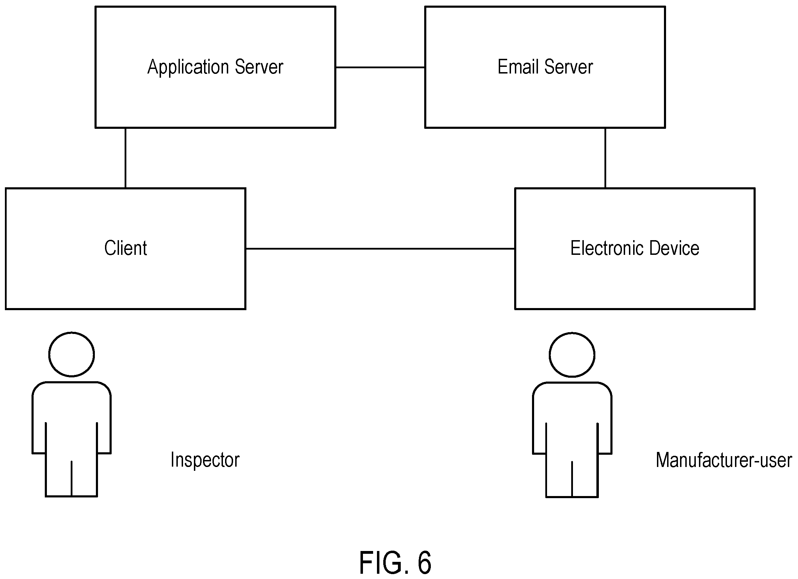

In one embodiment, an inspection agency may grant authorization to a third-party platform, allowing the third-party platform to preliminarily inspect and gather files of the user before providing the files to the inspection agency, as illustrated in FIG. 6. This way, the third-party platform may be deployed with an application server and an email server, and an application of the third-party platform is installed on both the inspector's mobile phone and the user's computer.

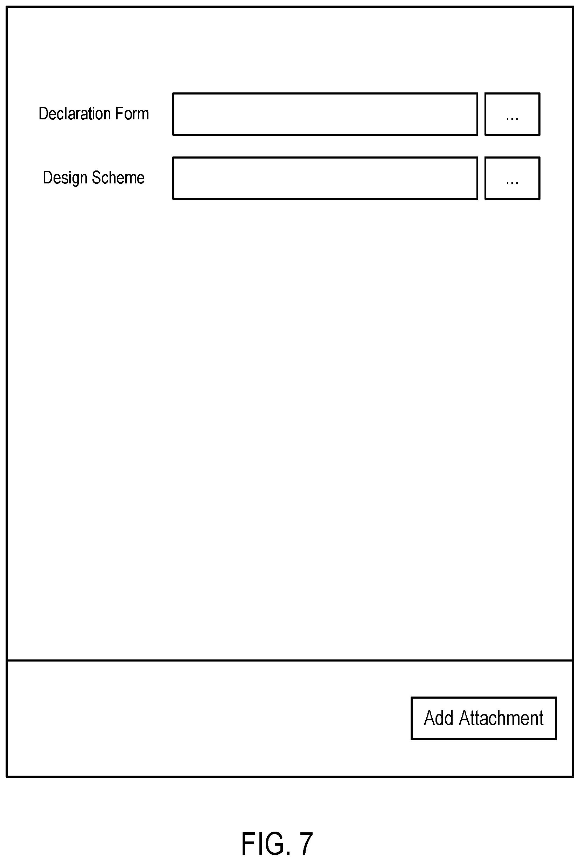

Referring to FIG. 7, in this application scenario, after inspecting a to-be-uploaded file by the user, the inspector may open the application in the mobile phone and may click the button labeled "Add Attachment" in the application interface. Then, the application in the mobile phone may, in response to this operation of the inspector, send an identification code acquisition request to the application server. After receiving the request, the application server may generate an identification code "c3od" and feedback the identification code to the application in the inspector's mobile phone. This way, the identification code "c3od" can be displayed on the button with which the attachment was originally uploaded. At this time, a button labeled "Send" (not illustrated) may also pop up to the left of the identification code. In a practical application scenario, the Send button may be triggered after corresponding file information is displayed in a widget of the interface.

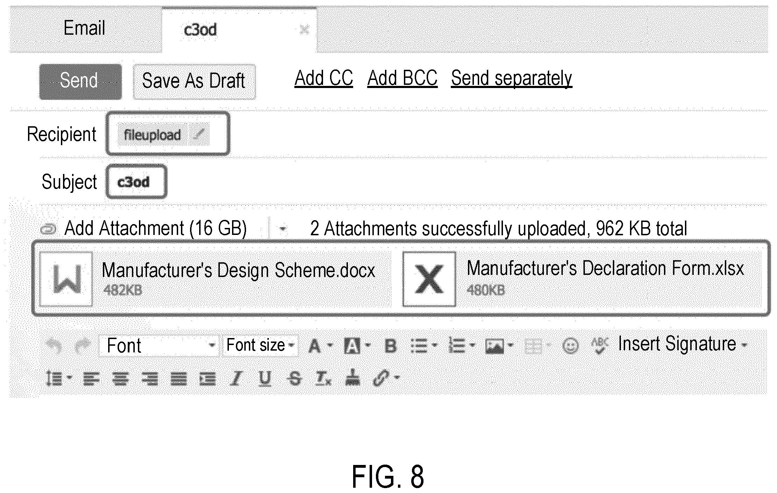

In the illustrated embodiment, the inspector may display an identification code to the user after the client receives the identification code. At this time, the user may open the application installed in his own electronic device and enter a file upload interface. As illustrated in FIG. 8, the file upload interface may be an email sending interface. In this email sending interface, the recipient may be automatically filled in with the address of the email server. Certainly, the address of the email server may also be provided by the inspector, which is not limited in the disclosure. This way, a to-be-uploaded file may be sent by email as an attachment, and the identification code may be used as the email title so that an email is sent to the email server. For example, the electronic device may upload two files: "Manufacturer's Declaration Form" and "Manufacturer's Design Scheme."

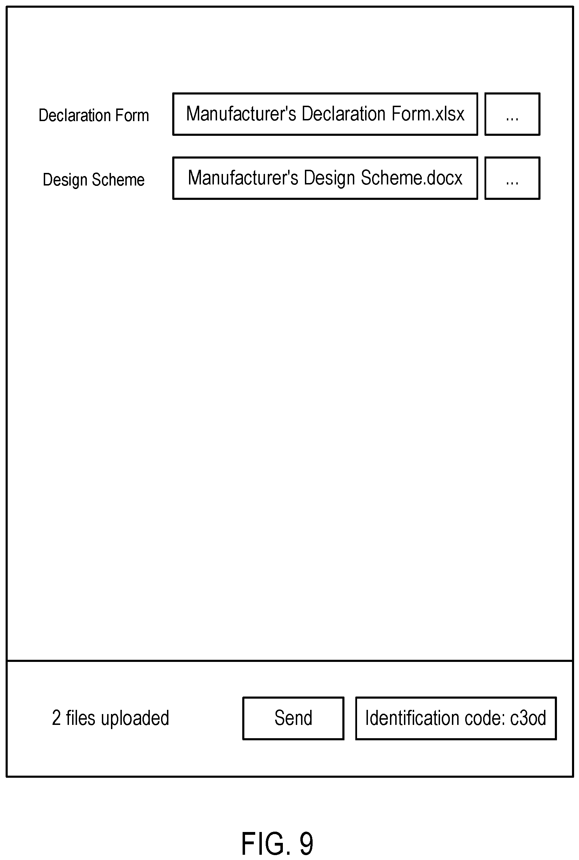

In this application scenario, after receiving a file and an identification code that are uploaded, the email server may send the file name of the file as file information to the service server along with the identification code corresponding to the file. This way, the service server knows which identification code corresponds to the currently received file information. After receiving the file information and the identification code, the service server can send the file information to the mobile phone that has previously requested identification code generation. This way, the inspector's mobile phone can temporarily store the received file information. After receiving the file information, the mobile phone of the inspector can display prompt information such as "2 files have been uploaded" on the page to indicate that two pieces of file information have been received so far. As illustrated in FIG. 9, the inspector may add corresponding file information to the two widgets "Declaration Form" and "Design Scheme" on the current page to tag the file information correspondingly. Then, the inspector can click the Send button to feedback the tagged file information to the service server. Then, after receiving confirmation information sent from the inspector's mobile phone, the service server can determine that the files received by the email server are inspected, and meanwhile, can feedback the tagged file information to the email server so that the email server classifies and stores the received files. Subsequently, the email server may send the stored files to the server of the inspection agency in a batch following a fixed time pattern.

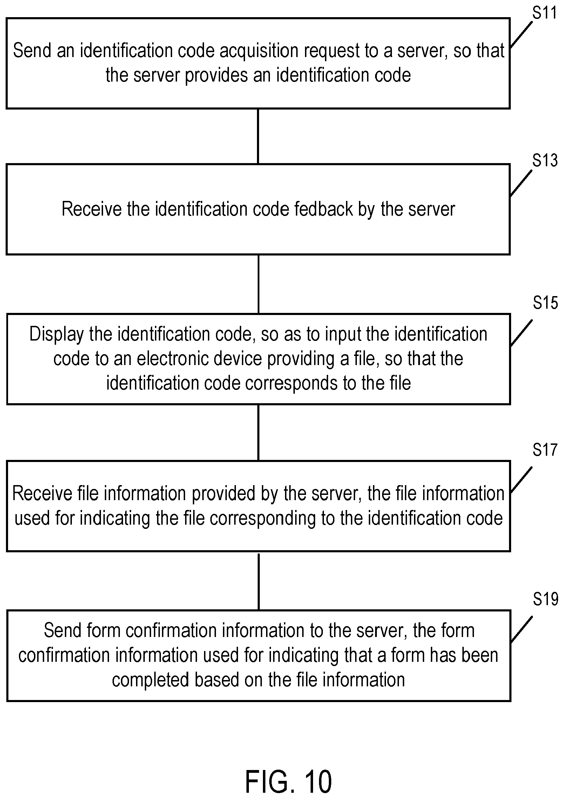

FIG. 10 is a flow diagram illustrating a network interaction method performed by a client device according to some embodiments of the disclosure. The method may be implemented by a client device and includes the following steps.

S11: send an identification code acquisition request to a server, so that the server provides an identification code.

In one embodiment, when a user needs to upload a file to the server, an identification code acquisition request may be sent to the server through a client of an inspector. The identification code acquisition request may include an identifier for representing the client. This way, the server can subsequently feedback a generated identification code to the client according to the identifier. Specifically, the identifier may be an IP address of the client in the network or may be a login account ID in the software running in the client.

In one embodiment, the server may generate a corresponding identification code after receiving the identification code acquisition request sent from the client. The identification code may be a character string. In practical applications, the identification code may be associated with a valid duration. The valid duration is used for representing a duration in which the identification code is in a valid state. For example, if the valid duration associated with the identification code is ten (10) minutes, then it indicates that the identification code is valid within ten (10) minutes after the identification code is generated. However, the identification code becomes invalid ten (10) minutes later. In this embodiment, the generating an identification code may include generating the identification code in the current manner of generating a verification code and may further include generating the identification code according to the identification code acquisition request. Specifically, when the identification code is generated according to the identification code acquisition request, the identification code acquisition request may be a character string carrying a client identifier and a request sent time. In a practical application scenario, the character string may be mapped to a hash value with a fixed length using a hash operation. The hash value can thus serve as the identification code. Since usually one identification code acquisition request is sent by a client at a time, the hash value generated according to the identification code acquisition request is unique, thereby ensuring the uniqueness of the generated identification code.

S13: receive the identification code returned by the server.

S15: display the identification code, to input the identification code to an electronic device providing a file, so that the identification code corresponds to the file.

In one embodiment, the server may feedback the identification code to the client after generating the identification code. This way, the client of the inspector can display the identification code to the user for viewing after receiving the identification code. Thus, the user can input the identification code to his own electronic device according to the identification code displayed and associate a to-be-uploaded file with the identification code. Specifically, the associating the file with the identification code may include sending, by the electronic device, a file upload packet to the server. The file upload packet may include both the file and the identification code so that the file and the identification code in the same file upload packet can be associated. After receiving the packet uploaded by the electronic device, the server can extract the file and the identification code in the packet and store the file and the identification code in an associated manner locally.

S17: receive file information provided by the server, the file information used for indicating the file corresponding to the identification code.

In one embodiment, after the server receives the file and the identification code uploaded by the user's electronic device, to confirm that the file has indeed been inspected by the inspector, feedback can be made to the client who requested identification code generation regarding file information of the file associated with the identification code. In some embodiments, to ensure the security of files uploaded by users, the server does not feedback the file per se to the client of the inspector. Instead, file information of the file is returned. The aforementioned file information may refer to the file name and file type. For example, if the file uploaded by the user is a declaration form edited using Excel, then the file information received by the client can be "Declaration Form," and the type can be "Excel." This way, the client will receive the file information without receiving the file per se, thereby ensuring file security.

S19: send the form confirmation information to the server, the form confirmation information used for indicating that a form has been completed based on the file information.

In one embodiment, after receiving file information sent from the server, the client of the inspector may feedback form confirmation information to the server. The form confirmation information may just be a confirmation instruction without any specific content. This way, after receiving the form confirmation information sent from the client, the server will regard the file represented by the file information as inspected, and the server can then archive the file locally. Additionally, the form confirmation information may also be used for classifying files represented by the file information. In a practical application scenario, a user may upload more than one file at once. Accordingly, having received multiple files, the server would not know the content of each file. At this time, the server may send file information of the files to the client, so that the inspector can classify the file information in the client according to file names contained in the file information. As illustrated in FIG. 3, the client may have a widget corresponding to a file that will potentially be uploaded. The widget allows file information corresponding to the file to be loaded. For example, in the widget corresponding to the Declaration Form in FIG. 3, file information with the file name of "Manufacturer's Declaration Form" may be loaded; in the widget corresponding to the Design Scheme, file information with the file name of "Manufacturer's Design Scheme" may be loaded. This way, loading file information on the corresponding widget in the client is equal to adding a tag to the file information. When providing form confirmation information to the server, the client can send file information to the server along with a tag added to the file information. The server identifies the tag of the file information to determine file type represented by the file information, to store the file in a specified path in accordance with the type thereof.

In one embodiment, when displaying a received identification code, the client may display the identification code on a display of the client. This way, the user can view the identification code on the display of the client. Additionally, the client may further play the identification code through a loudspeaker so that the user can directly listen to the identification code without viewing the display of the client. Additionally, the client may further display, through the display, a resource having the identification code. The resource may be, for example, a document having the identification code as the document name. The resource may be sent to the electronic device through the client so that the electronic device can locally view the identification code. Additionally, the client may further display, through the display, a graphic code representing the identification code. The graphic code may be a quick-response (QR) code, a bar code, or the like for representing the identification code. After scanning the graphic code, the user's electronic device will automatically identify the identification code represented by the graphic code.

In one embodiment, after receiving the file information sent from the server, the client may display the file information in a specified widget according to the operation of the inspector. Specifically, the specified widget may be an interaction bar for loading file information. The user clicks the interaction bar or a button beside the interaction bar to call out a file information selection interface from the client. Returning to FIG. 4, file information corresponding to the currently generated identification code may be listed in this interface. For example, in FIG. 4, the user sends two files, namely "User's Declaration Form" and "User's Design Scheme," to the server through the electronic device. Then, the illustrated interface can include file information of these two files. The inspector may select to fill in corresponding file information according to the current widget type. After filling in the file information into the corresponding widget, the client can add a corresponding tag to the file information. This way, when providing form confirmation information to the server, the client can send file information to the server along with a tag added to the file information. The server identifies the tag of the file information to determine file type represented by the file information, to store the file in a specified path in accordance with the type thereof. In some embodiments, the inspector may also serve as a user with respect to the client. Thus, the user in the disclosure may refer to a different person depending on the terminal device.

In one embodiment, the file information received by the client may include a file identifier for representing a file, where the file identifier may be, for example, the file name. This way, after receiving file information, the client can automatically identify the file identifier in the file information. Once the meaning of the file identifier is recognized, the file information can be automatically displayed in a corresponding specified widget. For example, when the client recognizes the file identifier of file information to be "Manufacturer's Declaration Form," then the client can automatically display the file information in the specified widget representing the "Declaration Form." Specifically, the client may identify the file identifier using Optical Character Recognition (OCR) technology. With automatic identification and automatic display, the workload of the inspector can be decreased.

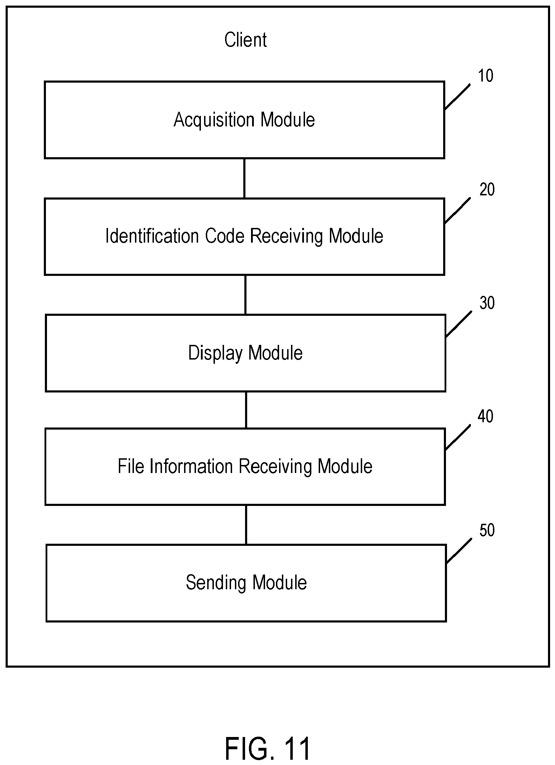

As illustrated in FIG. 11, the disclosure further provides a client, the client including the following modules: an acquisition module 10, used for sending an identification code acquisition request to a server, so that the server provides an identification code; an identification code receiving module 20, used for receiving the identification code returned by the server; a display module 30, used for displaying the identification code, to input the identification code to an electronic device providing a file, such that the identification code corresponds to the file; file information receiving module 40, used for receiving file information provided by the server, the file information used for indicating the file corresponding to the identification code; and a sending module 50, used for sending form confirmation information to the server, the form confirmation information used for indicating that a form has been completed based on the file information.

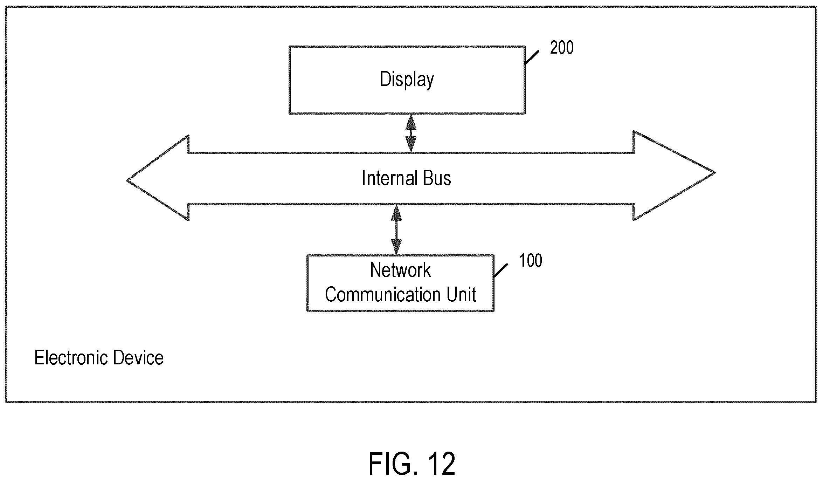

As illustrated in FIG. 12, the disclosure further provides an electronic device, including a network communication unit 100, a display 200, and an internal bus coupling the network communication unit 100 and display 200.

The network communication unit is used for sending an identification code acquisition request to a server, so that the server provides an identification code; receiving the identification code returned by the server; receiving file information provided by the server, the file information used for indicating a file corresponding to the identification code; and sending form confirmation information to the server, the form confirmation information used for indicating that a form has been completed based on the file information.

The display is used for displaying the identification code, inputting the identification code to an electronic device providing a file, such that the identification code corresponds to the file.

In one embodiment, the network communication unit may be an interface configured according to a standard stipulated in a communication protocol and used for performing network connection and communication. The network communication unit may include, but is not limited to, wired communication and/or wireless communication.

In one embodiment, the display may be divided according to the manufacturing material into the following displays: a cathode ray tube (CRT) display, a plasma display, a liquid crystal display (LCD), a light-emitting diode (LED) display screen, and the like. Certainly, the display is not limited to a planar display, and may also be an arc display, a stereoscopic display, or the like.

The disclosure further provides a computer storage medium. The computer storage medium has computer program instructions stored thereon, and the computer program instructions, when executed, implement the following steps, described previously in the description of FIG. 10.

S11: send an identification code acquisition request to a server, so that the server provides an identification code.

S13: receive the identification code returned by the server.

S15: display the identification code, to input the identification code to an electronic device providing a file, so that the identification code corresponds to the file.

S17: receive file information provided by the server, the file information used for indicating the file corresponding to the identification code.

S19: send the form confirmation information to the server, the form confirmation information used for indicating that a form has been completed based on the file information.

In this embodiment, the computer storage medium may include a physical apparatus for storing information, which usually digitizes information and then stores the information in a medium using an electrical, magnetic, or optical method. The computer storage medium described in this embodiment may further include apparatuses for storing information using electric energy such as various memories (e.g., RAM or ROM), apparatuses for storing information using magnetic energy (e.g., hard disks, floppy disks, magnetic tapes, magnetic core memory, magnetic bubble memory, or USB flash drives), and apparatuses for storing information in an optical manner (e.g., CD or DVD). Certainly, other readable storage media such as quantum memory or graphene memory also exist.

For explanations of the functions and effects achieved by executing the computer program instructions of the computer storage medium provided in this embodiment, reference and comparison may be made to other embodiments in this application.

The disclosure further provides a network interaction method. The method may be applied to a client, and the method includes the following steps.

S21: generate an identification code.

S23: send the identification code to a server.

S25: display the identification code, to input the identification code to an electronic device providing a file, so that the identification code corresponds to the file.

S27: receive file information provided by the server, the file information used for indicating the file corresponding to the identification code.

S29: send the form confirmation information to the server, the form confirmation information used for indicating that a form has been completed based on the file information.

In this embodiment, the identification code may be directly generated by the client. Specifically, after the to-be-uploaded file of the user is inspected by the inspector, the inspector may trigger an operation generating an identification code in his own client. For example, the inspector may click the button "Generate Identification Code" in the current interface of the client so that the client can generate an identification code. Specifically, to ensure that different identification codes are generated for different clients, the identification code may be generated based on an account that the client currently logs in to and the time at which identification code generation was triggered. Since usually one identification code generation instruction is triggered by an account at a time, the uniqueness of the identification code generated based on account information and time information can be assured. Specifically, a character string representing account information and time information may be mapped to a character string with a fixed length through a hash algorithm, where the character string with the fixed-length may serve as the identification code. This way, the client can directly display the identification code to the user for viewing and can send the identification code to the server, so that when the server receives file information corresponding to the identification code, the server will send the file information to the client.

In one embodiment, when displaying a received identification code, the client may display the identification code on a display of the client. This way, the user can view the identification code on the display of the client. Additionally, the client may further play the identification code through a loudspeaker so that the user can directly listen to the identification code without viewing the display of the client. Additionally, the client may further display, through the display, a resource having the identification code. The resource may be, for example, a document having the identification code as the document name. The resource may be sent to the electronic device through the client so that the electronic device can locally view the identification code. Additionally, the client may further display, through the display, a graphic code representing the identification code. The graphic code may be a QR code, a bar code, or the like for representing the identification code. After scanning the graphic code, the user's electronic device will automatically identify the identification code represented by the graphic code.

In one embodiment, after receiving the file information sent from the server, the client may display the file information in a specified widget according to the operation of the inspector. Specifically, the specified widget may be an interaction bar for loading file information. The user clicks the interaction bar or a button beside the interaction bar to call out a file information selection interface from the client. File information corresponding to the currently generated identification code may be listed in this interface. The inspector may select to fill in corresponding file information according to the current widget type. After filling in the file information into the corresponding widget, the client can add a corresponding tag to the file information. This way, when providing form confirmation information to the server, the client can send file information to the server along with a tag added to the file information. The server identifies the tag of the file information to determine file type represented by the file information, to store the file in a specified path in accordance with the type thereof. In some embodiments, the inspector may also serve as a user with respect to the client. Thus, the user in the disclosure may refer to a different person depending on the terminal device.

In one embodiment, the file information received by the client may include a file identifier for representing a file, where the file identifier may be, for example, the file name. This way, after receiving file information, the client can automatically identify the file identifier in the file information. Once the meaning of the file identifier is recognized, the file information can be automatically displayed in a corresponding specified widget. For example, when the client recognizes the file identifier of file information to be "Manufacturer's Declaration Form," then the client can automatically display the file information in the specified widget representing the "Declaration Form." Specifically, the client may identify the file identifier using OCR (Optical Character Recognition) technology. With automatic identification and automatic display, the workload of the inspector can be decreased.

The disclosure further provides a client, the client including the following modules: an identification code generation module 11, used for generating an identification code; an identification code sending module 21, used for sending the identification code to a server; a display module 31, used for displaying the identification code, to input the identification code to an electronic device providing a file, such that the identification code corresponds to the file; file information receiving module 41, used for receiving file information provided by the server, the file information used for indicating the file corresponding to the identification code; and a sending module 51, used for sending form confirmation information to the server, the form confirmation information used for indicating that a form has been completed based on the file information.

The disclosure further provides an electronic device, including a network communication unit 110, a processor 210, and a display 310.

The network communication unit 110 is used for performing data interaction with a server.

The display 210 is used for displaying an identification code.

The processor 310 is used for generating an identification code; sending the identification code to the server through the network communication unit; controlling the display to display the identification code, to input the identification code to an electronic device providing a file, so that the identification code corresponds to the file; receiving, through the network communication unit, file information provided by the server, the file information used for indicating the file corresponding to the identification code; and sending form confirmation information to the server through the network communication unit, the form confirmation information used for indicating that a form has been completed based on the file information.

In this embodiment, the network communication unit may be an interface configured according to a standard stipulated in a communication protocol and used for performing network connection and communication. The network communication unit may include, but is not limited to, wired communication and/or wireless communication.

In this embodiment, the display may be divided according to the manufacturing material into the following displays: a cathode ray tube (CRT) display, a plasma display, a liquid crystal display (LCD) screen, a light-emitting diode (LED) display screen, and the like. Certainly, the display is not limited to a planar display, and may also be an arc display, a stereoscopic display, or the like.

In this embodiment, the processor may be implemented in any appropriate manner. For example, the processor may employ the form of a microprocessor or processor and a computer-readable medium that stores computer-readable program code (for example, software or firmware) executable by the (micro)processor, a logic gate, a switch, an application-specific integrated circuit (ASIC), a programmable logic controller, and an embedded microcontroller. No such limitation is made in the disclosure.

The disclosure further provides a computer storage medium. The computer storage medium has computer program instructions stored thereon, and the computer program instructions, when executed, implement the following steps:
S21: generate an identification code.
S23: send the identification code to a server.
S25: display the identification code, to input the identification code to an electronic device providing a file, so that the identification code corresponds to the file.
S27: receive file information provided by the server, the file information used for indicating the file corresponding to the identification code.
S29: send the form confirmation information to the server, the form confirmation information used for indicating that a form has been completed based on the file information.

In this embodiment, the computer storage medium may include a physical apparatus for storing information, which usually digitizes information and then stores the information in a medium using an electrical, magnetic, or optical method. The computer storage medium described in this embodiment may further include apparatuses for storing information using electric energy such as various memories (e.g., RAM or ROM), apparatuses for storing information using magnetic energy (e.g., hard disks, floppy disks, magnetic tapes, magnetic core memory, magnetic bubble memory, or USB flash drives), and apparatuses for storing information in an optical manner (e.g., CD or DVD). Certainly, other readable storage media such as quantum memory or graphene memory also exist.

For explanations of the functions and effects achieved by executing the computer program instructions of the computer storage medium provided in this embodiment, reference and comparison may be made to other embodiments in this application.

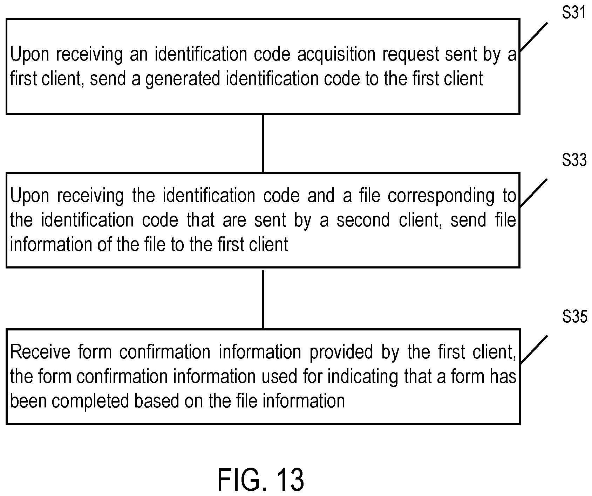

As illustrated in FIG. 13, the disclosure further provides a network interaction method. The method is applied to a server, and the method includes the following steps.

S31: upon receiving an identification code acquisition request sent by a first client, send a generated identification code to the first client.

S33: upon receiving the identification code and a file corresponding to the identification code that is sent by a second client, send file information of the file to the first client.

S35: receive form confirmation information provided by the first client, the form confirmation information used for indicating that a form has been completed based on the file information.

In this embodiment, the first client may be a client used by an inspector, and the second client may be a client used by a user intending to upload a file.

In this embodiment, the server may generate a corresponding identification code after receiving the identification code acquisition request sent from the first client. The identification code may be a character string. In practical applications, the identification code may be associated with a valid duration. The valid duration is used for representing a duration in which the identification code is in a valid state. For example, if the valid duration associated with the identification code is 10 minutes, then it indicates that the identification code is valid within 10 minutes after the identification code is generated. However, the identification code becomes invalid 10 minutes later. In this embodiment, the generating an identification code may include generating the identification code in the current manner of generating a verification code and may further include generating the identification code according to the identification code acquisition request. Specifically, when the identification code is generated according to the identification code acquisition request, the identification code acquisition request may be a character string carrying a first client identifier and a request sent time. In a practical application scenario, the character string may be mapped to a hash value with a fixed length using a hash operation. The hash value can thus serve as the identification code. Since usually one identification code acquisition request is sent by a client at a time, the hash value generated according to the identification code acquisition request is unique, thereby ensuring the uniqueness of the generated identification code.

In this embodiment, after the server receives the file and the identification code uploaded by the second client, to confirm that the file has indeed been inspected by the inspector, feedback can be made to the first client who requested identification code generation regarding file information of the file associated with the identification code can be returned. In some embodiments, to ensure the security of files uploaded by the user, the server does not feedback the file per se to the first client of the inspector. Instead, file information of the file is returned. The aforementioned file information may refer to the file name and file type. For example, if the file uploaded by the user is a declaration form edited using Excel, then the file information received by the client can be "Declaration Form," and the type can be "Excel." This way, the first client will receive the file information without receiving the file per se, thereby ensuring file security.

In this embodiment, after receiving the file information sent from the server, the first client of the inspector may feedback form confirmation information to the server. The form confirmation information may just be a confirmation instruction without any specific content. This way, after receiving the form confirmation information sent from the first client, the server considers that the file represented by the file information is indeed inspected, and then the server can locally archive the file. Additionally, the form confirmation information may also be used for classifying files represented by the file information. In a practical application scenario, a user may upload more than one file at once. Accordingly, having received multiple files, the server would not know the content of each file. At this time, the server may send file information of the files to the first client, so that the inspector can classify the file information in the first client according to file names contained in the file information, and thus the server can determine file types represented by the file information, to store the files in specified paths in accordance with the types thereof.

The disclosure further provides an electronic device. The electronic device includes a processor and a memory. The memory has a computer program stored thereon, and the computer program, when executed by the processor, implements the following steps:
S31: upon receiving an identification code acquisition request sent by a first client, send a generated identification code to the first client.
S33: upon receiving the identification code and a file corresponding to the identification code that are sent by a second client, send file information of the file to the first client.
S35: receive form confirmation information provided by the first client, the form confirmation information used for indicating that a form has been completed based on the file information.

The disclosure further provides a network interaction method. The method may be applied to a service server, and the method includes the following steps:
S41: upon receiving an identification code acquisition request sent by a client, send a generated identification code to the client.
S43: acquire, from an information server, file information of a file corresponding to the identification code.
S45: send the file information to the client.
S47: receive form confirmation information provided by the client, the form confirmation information used for indicating that a form has been completed based on the file information.

In this embodiment, the server may be split into two servers having independent functions. The server may include a service server and an information server. The service server may perform data interaction with the client of the inspector to receive an identification code acquisition request sent from the client, provide a generated identification code to the client, feedback to the client file information of a file uploaded by the user, and receive form confirmation information sent from the client. The information server may receive a file uploaded by the user's electronic device and provide file information of the file to the service server.

In this embodiment, when a file of the user is inspected by the inspector, the inspector may send an identification code acquisition request to the service server through the client, so that the service server can generate an identification code in the aforementioned manner and feedback the identification code to the client. The client may display the identification code to the user so that the user can input the identification code to the electronic device and can send the to-be-uploaded file along with the identification code to the information server. In practical applications, when a user uploads files by sending emails, the information server can be an email server. This way, after receiving the file and the identification code uploaded by the user's electronic device, the information server can send file information of the file and the identification code to the service server. This way, the service server can acquire the file information of the file corresponding to the identification code from the information server. Then, the service server can provide the file information to the client that had previously requested identification code generation. After receiving the file information, the client may fill in the file information in a corresponding specified widget, to implement the process of adding a tag to the file information. This way, after filling in the file information in the corresponding specified widget, the client can send form confirmation information to the service server. The form confirmation information may be used for indicating that a form has been completed based on the file information, or, in other words, that a corresponding tag has been added to the file information.

The disclosure further provides a service server. The service server includes a processor and a memory. The memory has a computer program stored thereon, and the computer program, when executed by the processor, implements the following steps:
S41: upon receiving an identification code acquisition request sent by a client, send a generated identification code to the client.
S43: acquire, from an information server, file information of a file corresponding to the identification code.
S45: send the file information to the client.
47: receive form confirmation information provided by the client, the form confirmation information used for indicating that a form has been completed based on the file information.

The disclosure further provides a network interaction method. The method may be applied to a service server, and the method includes the following steps:
S51: receive an identification code provided by a client.
S53: acquire, from an information server, file information of a file corresponding to the identification code.
S55: send the file information to the client.
S57: receive form confirmation information provided by the client, the form confirmation information used for indicating that a form has been completed based on the file information.

In this embodiment, the identification code may be locally generated by the client, so that after a file of the user is inspected by the inspector, the inspector can generate a current identification code in the client. This way, the client of the inspector can directly provide the current identification code that had been generated to the service server, and display the generated identification code to the user for viewing. The subsequent file upload and file information transmission process are both consistent with the description in the aforementioned embodiments, which will not be described herein again.

The disclosure further provides a service server. The service server includes a processor and a memory. The memory has a computer program stored thereon, and the computer program, when executed by the processor, implements the following steps:
S51: receive an identification code provided by a client.
S53: acquire, from an information server, file information of a file corresponding to the identification code.
S55: send the file information to the client.
S57: receive form confirmation information provided by the client, the form confirmation information used for indicating that a form has been completed based on the file information.

The disclosure further provides a network interaction method. The method may be applied to an information server, and the method includes the following steps:
S61: receive an identification code and a file corresponding to the identification code that are sent by a client.
S63: send the identification code and file information of the file to a service server, so that the service server provides the file information to the client for confirmation by the client.

In this embodiment, after receiving the file and the identification code uploaded by the user's electronic device, the information server can send file information of the file and the identification code to the service server. Thus, the service server can provide the file information to the client that had previously requested identification code generation. After receiving the file information, the client may fill in the file information in a corresponding specified widget, to implement the process of adding a tag to the file information. This way, after filling in the file information in the corresponding specified widget, the client can send form confirmation information to the service server. The form confirmation information may be used for indicating that a form has been completed based on the file information, or, in other words, that a corresponding tag has been added to the file information.

The disclosure further provides an information server. The information server includes a processor and a memory. The memory has a computer program stored thereon, and the computer program, when executed by the processor, implements the following steps:

S61: receive an identification code and a file corresponding to the identification code that are sent by a client.

S63: send the identification code and file information of the file to a service server, so that the service server provides the file information to the client for confirmation by the client.

The embodiments in the disclosure are described in a progressive manner, and for identical or similar parts between different embodiments, reference may be made to each other so that each of the embodiments focuses on differences from other embodiments.
In view of the above, in the disclosure, when an inspector needs to upload a file of a user to a server, the inspector may acquire an identification code from the server in advance, and then display the identification code to the user for viewing. The user may upload the file inspected by the inspector to the server through his own electronic device. While uploading the file, the user may attach the identification code. This way, after the server receives the file and the identification code uploaded by the user, the server can send the file information of the file to a client of the inspector who had previously acquired the identification code. The file information herein does not refer to the file per se, but may refer to an identifier representing the file. For example, the file information may be the title of the file. This way, after the client of the inspector receives the file information, a form can be completed based on the file and form confirmation information can be returned to the server to indicate that the file corresponding to the file information is indeed inspected and verified. As seen above, by means of the technical solutions in the disclosure, the client of the inspector does not store the files uploaded by the user, thereby ensuring the security of user files.

In the 1990s, whether a technical improvement is a hardware improvement (for example, an improvement on a circuit structure such as a diode, a transistor, or a switch) or a software improvement (an improvement on a method procedure) can be clearly differentiated. However, along with the development of technologies, many improvements in method procedures at present can be regarded as direct improvements in hardware circuit structures. Almost all the designers program an improved method procedure into a hardware circuit to obtain a corresponding hardware circuit structure. Therefore, it cannot be said that an improvement in a method procedure cannot be implemented by a hardware entity module. For example, a programmable logic device (PLD) (for example, a field-programmable gate array (FPGA)) is such an integrated circuit whose logic function is determined by device programming of a user. The designers may program by themselves to "integrate" a digital system with a PLD, and there is no need to ask a chip manufacturer to design and manufacture an application-specific integrated circuit chip. Furthermore, instead of manually manufacturing an integrated circuit chip, such programming is often implemented by "logic compiler" software, which is similar to a software compiler used in program development and writing, and before compiling, original code may also be written in a particular programming language, which is referred to as a hardware description language (HDL). There is not only one type of HDL but also a plurality of types of HDLs, for example, ABEL (Advanced Boolean Expression Language), AHDL (Altera Hardware Description Language), Confluence, CUPL (Cornell University Programming Language), HDCal, JHDL (Java Hardware Description Language), Lava, Lola, MyHDL, PALASM, and RHDL (Ruby Hardware Description Language), among which VHDL (Very-High-Speed Integrated Circuit Hardware Description Language) and Verilog2 are most commonly used at present. Those skilled in the art should also understand that a hardware circuit for implementing a logic method procedure may be easily obtained by programming such a method procedure into an integrated circuit with a logical programming and the above hardware description languages.

Through the above description of the embodiments, those skilled in the art can clearly understand that the disclosure can be implemented by means of software plus a necessary universal hardware platform. Based on such an understanding, the essence of the technical solution of the disclosure or the part that contributes to the prior art may be embodied in the form of a software product. The computer software product may be stored in a storage medium such as a ROM/RAM, a magnetic disk, or an optical disc, and include instructions to instruct a computer device (which may be a personal computer, a server, a network device, or the like) to perform the methods described in the embodiments of the disclosure or in some parts of the embodiments.

## Claims

1. A method comprising:
sending (S11), by a client device, an identification code acquisition request to a server;
receiving (S13),
at the client device, an identification code from the server, the identification code generated and returned by the server in response to the identification code acquisition request;
displaying (S15),
on the client device, the identification code, the display of the identification code capable of being input to an electronic device;
receiving (S17),
at the client device, file information provided by the server, the file information associated with a file stored on the electronic device and corresponding to the identification code, the file information provided by the server after the server received the identification code input to the electronic device and the file stored on the electronic device; and
sending (S19),
by the client device, form confirmation information to the server, the form confirmation information indicating that a form has been completed based on the file information.

2. The method of claim 1, the displaying the identification code comprising a display operation selected from the group consisting of: displaying the identification code on a display screen of the client device; playing, through a loudspeaker of the client device, the identification code; displaying, through the display screen, a resource having the identification code; or displaying, through the display screen, a graphic code representing the identification code.

3. The method of claim 1, further comprising: displaying the file information in a widget according to a user operation.

4. The method of claim 1, further comprising displaying the file information in a widget according to a file identifier in the file information.

5. The method of claim 1, further comprising:
generating, by the server, the identification code in response to the identification code acquisition request;
sending, by the server, the identification code to the client device;
receiving, by the server, the identification code and the file stored on the electronic device;
sending, by the server to the client device, the file information; and
receiving, at the server, the form confirmation information from the client device in response to sending the file information.

6. The method of claim 1, further comprising:
sending, by the server, the identification code to the client device in response to the identification code acquisition request;
receiving, by the server, the file information from an information server;
sending, by the server, the file information to the client device; and
receiving, at the server, the form confirmation information from the client device in response to sending the file information.

7. The method of claim 1, further comprising:
receiving, at an information server, the identification code and the file stored on the electronic device; and
sending, by the information server, the identification code and the file information to the server.

8. The method of claim 1, the identification code associated with a valid duration.

9. The method of claim 1, further comprising generating the identification code by executing a hash operation on a portion of the identification code acquisition request.

10. The method of claim 3, the widget corresponding to a type of the file.

11. The method of claim 10, further comprising using the type as a tag for the file information.

12. The method of claim 1, further comprising using the form confirmation information to classify files represented by the file information.

13. A computer-readable medium having stored thereon a plurality of instructions, the plurality of instructions including instructions which, when executed by a processor, cause the processor to perform the steps of a method according to any one of the preceding claims.

14. An apparatus adapted to carry out a method according to any one of claims 1-12.

## Patentansprüche

1. Verfahren umfassend:
Senden (S11) einer Identifizierungscodebezugsanfrage durch eine Clientvorrichtung an einen Server;
Empfangen (S13) eines Identifizierungscodes von dem Server an der Clientvorrichtung, wobei der Identifizierungscode durch den Server generiert und zurückgegeben wird in Erwiderung auf die Identifizierungscodebezugsanfrage;
Anzeigen (S15) des Identifizierungscodes auf der Clientvorrichtung, wobei die Anzeige des Identifizierungscodes in eine elektronische Vorrichtung eingegeben werden kann;
Empfangen (S17) von Dateiinformation, welche durch den Server bereitgestellt ist, an der Clientvorrichtung, wobei die Dateiinformation mit einer Datei assoziiert ist, welche auf der elektronischen Vorrichtung gespeichert ist und dem Identifizierungscode entspricht, wobei die Dateiinformation durch den Server bereitgestellt wird nachdem der Server den Identifizierungscode empfangen hat, welcher in die elektronische Vorrichtung eingegeben worden ist, und die Datei auf der elektronischen Vorrichtung gespeichert wird; und
Senden (S19) von Formularbestätigungsinformation an den Server durch die Clientvorrichtung, wobei die Formularbestätigungsinformation indiziert, dass ein Formular vervollständigt wurde basierend auf der Dateiinformation.

2. Verfahren nach Anspruch 1, wobei das Anzeigen des Identifizierungscodes einen Anzeigevorgang umfasst, welcher ausgewählt ist aus der Gruppe bestehend aus: Anzeigen des Identifizierungscodes auf einem Anzeigebildschirm der Clientvorrichtung; Abspielen des Identifizierungscodes durch einen Lautsprecher der Clientvorrichtung; Anzeigen einer Ressource, welche den Identifizierungscode aufweist, durch den Anzeigebildschirm der Clientvorrichtung; oder Anzeigen eines Grafikcodes, welcher den Identifizierungscode repräsentiert, durch den Anzeigebildschirm.

3. Verfahren nach Anspruch 1, ferner umfassend: Anzeigen der Dateiinformation in einem Widget entsprechend einem Benutzervorgang.

4. Verfahren nach Anspruch 1, ferner umfassend Anzeigen der Dateiinformation in einem Widget entsprechend einer Dateikennung in der Dateiinformation.

5. Verfahren nach Anspruch 1, ferner umfassend:
Generieren des Identifizierungscodes durch den Server in Erwiderung auf die Identifizierungscodebezugsanfrage;
Senden des Identifizierungscodes durch den Server an die Clientvorrichtung;
Empfangen des Identifizierungscodes und der Datei, welche auf der elektronischen Vorrichtung gespeichert ist, durch den Server;
Senden der Dateiinformation durch den Server an die Clientvorrichtung; und
Empfangen der Formularbestätigungsinformation von der Clientvorrichtung an dem Server in Erwiderung auf das Senden der Dateiinformation.

6. Verfahren nach Anspruch 1, ferner umfassend:
Senden des Identifizierungscodes an die Clientvorrichtung durch den Server in Erwiderung auf die Identifizierungscodebezugsanfrage;
Empfangen der Dateiinformation von einem Informationsserver durch den Server;
Senden der Dateiinformation durch den Server an die Clientvorrichtung; und
Empfangen der Formularbestätigungsinformation von der Clientvorrichtung an dem Server in Erwiderung auf das Senden der Dateiinformation.

7. Verfahren nach Anspruch 1, ferner umfassend:
Empfangen des Identifizierungscodes und der Datei, welche auf der elektronischen Vorrichtung gespeichert ist, an einem Informationsserver; und
Senden des Identifizierungscodes und der Dateiinformation durch den Informationsserver an den Server.

8. Verfahren nach Anspruch 1, wobei der Identifizierungscode mit einer gültigen Dauer assoziiert ist.

9. Verfahren nach Anspruch 1, ferner umfassend Generieren des Identifizierungscodes durch Ausführen eines Hashvorgangs auf einen Abschnitt der Identifizierungscodebezugsanfrage.

10. Verfahren nach Anspruch 3, wobei das Widget einem Typ der Datei entspricht.

11. Verfahren nach Anspruch 10, ferner umfassend Verwenden des Typs als ein Kennzeichen für die Dateiinformation.

12. Verfahren nach Anspruch 1, ferner umfassend Verwenden der Formularbestätigungsinformation, um Dateien zu klassifizieren, welche durch die Dateiinformation repräsentiert werden.

13. Computerlesbares Medium, welches eine darauf gespeicherte Mehrzahl von Instruktionen aufweist, wobei die Mehrzahl von Instruktionen Instruktionen umfasst, welche, wenn sie von einem Prozessor angewandt werden, den Prozessor veranlassen, die Schritte eines Verfahrens nach einem der vorhergehenden Ansprüche durchzuführen.

14. Vorrichtung, welche angepasst ist, ein Verfahren nach einem der Ansprüche 1-12 auszuführen.

## Revendications

1. Procédé, comprenant les étapes consistant à :
envoyer, par l'intermédiaire d'un dispositif client, une demande d'acquisition de code d'identification à un serveur ;
recevoir, au niveau du dispositif client, un code d'identification en provenance du serveur, le code d'identification étant généré et renvoyé par le serveur en réponse à la demande d'acquisition de code d'identification ;
afficher, sur le dispositif client, le code d'identification, l'affichage du code d'identification étant susceptible d'être entré dans un dispositif électronique ;
recevoir, au niveau du dispositif client, des informations de fichier fournies par le serveur, les informations de fichier étant associées à un fichier stocké sur le dispositif électronique et correspondant au code d'identification, les informations de fichier étant fournies par le serveur après que le serveur ait reçu le code d'identification entré dans le dispositif électronique et le fichier stocké sur le dispositif électronique ; et
envoyer, par l'intermédiaire du dispositif client, des informations de confirmation de formulaire au serveur, les informations de confirmation de formulaire indiquant qu'un formulaire a été rempli sur la base des informations de fichier.

2. Procédé selon la revendication 1, l'affichage du code d'identification comprenant une opération d'affichage choisie dans le groupe comprenant les étapes consistant à :
afficher le code d'identification sur un écran d'affichage du dispositif client ;
jouer, via un haut-parleur du dispositif client, le code d'identification ;
afficher, via l'écran d'affichage, une ressource présentant le code d'identification ; ou
afficher, via l'écran d'affichage, un code graphique représentant le code d'identification.

3. Procédé selon la revendication 1, comprenant en outre l'étape consistant à :
afficher les informations du fichier dans un gadget logiciel en fonction d'une opération d'utilisateur.

4. Procédé selon la revendication 1, comprenant en outre l'affichage des informations de fichier dans un gadget logiciel selon un identificateur de fichier dans les informations de fichier.

5. Procédé selon la revendication 1, comprenant en outre les étapes consistant à :
générer, par l'intermédiaire du serveur, le code d'identification en réponse à la demande d'acquisition de code d'identification ;
envoyer, par l'intermédiaire du serveur, le code d'identification au dispositif client ;
recevoir, par l'intermédiaire du serveur, le code d'identification et le fichier stocké sur l'appareil électronique ;
envoyer, par l'intermédiaire du serveur au dispositif client, les informations de fichier ; et
recevoir, au niveau du serveur, les informations de confirmation de formulaire en provenance du dispositif client en réponse à l'envoi des informations de fichier.

6. Procédé selon la revendication 1, comprenant en outre les étapes consistant à :
envoyer, par l'intermédiaire du serveur, le code d'identification au dispositif client en réponse à la demande d'acquisition de code d'identification ;
recevoir, par l'intermédiaire du serveur, les informations de fichier à partir d'un serveur d'informations ;
envoyer, par l'intermédiaire du serveur, les informations de fichier au dispositif client ; et
recevoir, au niveau du serveur, les informations de confirmation de formulaire en provenance du dispositif client en réponse à l'envoi des informations de fichier.

7. Procédé selon la revendication 1, comprenant en outre les étapes consistant à :
recevoir, au niveau d'un serveur d'informations, le code d'identification et le fichier stocké sur le dispositif électronique ; et
envoyer, par l'intermédiaire du serveur d'informations, le code d'identification et les informations de fichier au serveur.

8. Procédé selon la revendication 1, le code d'identification étant associé à une durée de validité.

9. Procédé selon la revendication 1, comprenant en outre la génération du code d'identification en exécutant une opération de hachage sur une partie de la demande d'acquisition de code d'identification.

10. Procédé selon la revendication 3, le gadget logiciel correspondant à un type du fichier.

11. Procédé selon la revendication 10, comprenant en outre l'étape consistant à utiliser le type en tant qu'étiquette pour les informations de fichier.

12. Procédé selon la revendication 1, comprenant en outre l'utilisation des informations de confirmation de formulaire pour classer des fichiers représentés par les informations de fichier.

13. Support lisible par ordinateur sur lequel est stockée une pluralité d'instructions, la pluralité d'instructions comprenant des instructions qui, lorsqu'elles sont exécutées par un processeur, amènent le processeur à exécuter les étapes d'un procédé selon l'une quelconque des revendications précédentes.

14. Appareil adapté pour mettre en œuvre un procédé selon l'une quelconque des revendications 1 à 12.
